# EUROPEAN PATENT APPLICATION

(11) **EP 1 640 824 A1**
(43) Date of publication of application: **29.03.2006**
(21) Application number: 04022492.5
(22) Date of filing: 22.09.2004
(51) Int. Cl.: G05B 19/042

(54) **Household appliance with integrated plugs**

(71) Applicant: Electrolux Home Products Corporation N.V., 1930 Zaventem (BE)
(72) Inventor: Campana, Patrizia, 31046 Oderzo, Treviso (IT); Teia, Massimo, 33097 Spilimbergo (IT); Fabrici, Lucio, 33080 Taiedo di Chions, Pordenone (IT); Bottos, Roberto, Porcia, Pordenone (IT)
(74) Representative: Giugni, Valter

(57) **Abstract**

Household appliance comprising control means to control the operation of the its functional devices, and to transmit to outer means a plurality of information relevant to said operation, and to receive from different outer means a plurality of information under electronic format, a first electric plug for the A.C. power supply to be engaged to an electric socket; said information from/to said control means are transferred on said first plug, which is provided with I.R. trasducers able to convert the received electric signals into I.R. signals, and also able to detect I.R. signal generated outside said appliance and to convert them into electric signals to be directed to said control means. The I.R. signals generated outside are send by transducing means placed on a second electric plug comprised in a second appliance; in this way it is possible, by simply engaging said two plugs, to exchange data and information, partially through infrared means, from/to said control means of said household appliance to/from a second associated appliance.

## Description

The present invention refers to an improved kind of household appliances, and especially of washing and drying machines, provided with a respective plug for the A.C. power supply, and which can be associated to each other so to constitute a reciprocal communication means.-

In the following of this invention reference will be made to a washing machine and to a drying machine, but it is here intended that what explained and illustrated can identically be applicable and used also to associate different appliances and respective different operating modes.-

Household appliances are largely known in the art which can be associated to each other and controlled in an integrated way through control means which detect with appropriated sensors the operating conditions of said appliances, which work out the relevant signals together with the inputs given by the users, and that convey in a coordinated way the relevant signals to said appliances, in order to determine and synchronize their overall operation.-

Generally the techniques to implement such operating modes are well known under the term of "home automation", and comprise a large varity of technical solutions, both in software and hardware, mainly aimed to implement either a fully household automation, or to improve the functions that are available for each machine/arrangement, depending on the operation modes of the other household appliances connected to a same home automation.-

Such trend is particularly favoured in that nowadays it is quite easy to carry out the remote control of said appliances, thanks to the availability of portable phones and of appropriate interfaces means.-

The many known solutions already divulged however are featured in that they require a growing operating complexity and corresponding increasing burdens, and generally are not able to integrate the functions of only two or of a limited number of appliances, and in the same time to be simple and cheap.-

From the Japanese patent Application n. 58130807 it is known to make-up a communication system between household appliances based on automatic communication between a "master" appliance and other "slave" appliances using optical and R.F. trasmission means.-

This solution is endangered in that the appliances have to be specifically designed to meet common operating modes, and furthermore it is requested to make-up some optical connections from a room to another; all that obviously requires additional costs, and moreover it doesn't allow any flexibility in using different appliances.-

From the US 5,815,086 it is known to realize an integrated control system of household appliances able to control a number of appliances placed in different rooms; such system, which uses I.R. communications means, however requires the existance and the management of an "universal transmitter" and also its control through a "central audio/video controller"; all that basically implies the same drawbacks of the previous case, i. e. high burdens and poor flexibility.-

From the US 5,793,125 it is divulged an "add-on smart socket" that is direcly connected to A.C. mains and on which some functions are arranged which control, through off-on inputs, the working of different appliances connected to it; even if said solution represents an improvement from the point of view of the installation and costs constraints, and also in the possibility of connecting various types of appliances, nevertheless it comprises logical computing and control means that obviously need to be programmed and adapted to any single installation, and so they require a remarkable complexity; moreover such "smart socket" doesn't allow the automatic communication of direct information from an appliance to another.-

It would therefore be desiderable, and is the main object of the present invention, to provide a family of appliances provided with means permitting to exchange each other information and controls, but alsoo to work in an autonomous an conventional way and without using additional control devices; such appliances moreover shall not require any specific activity of installation either among them or with reference to the environment where they're working, and of course they shall be produced without significantly increasing the machine complexity, and shall keep down the production costs with respect to the corresponding costs of a conventional washing machine, with specific reference to their physical configuration (hardware).-

According to the present invention, this aim is reached, along further ones that will be apparent from the following description, in a family of appliances incorporating the features as recited in the appended claims.-

Anyway the features and advantages of the present invention will be more readily understood from the description that is given below by way of a non limiting example with reference to the accompanying drawings, in which:
- fig. 1 shows symbolically the electric schematic of two appliances coupled according to the invention,
- fig. 2 shows a schematic of the A.C. supply plug of a first appliance according to the invention,
- fig. 3 shows the electric schematic of the A.C. supply plug of a second appliance according to the invention,
- fig. 4 shows a perspective view from the outside of the two plugs represented in the previous figures,
- fig. 5 shows symbolically the mutually corresponding arrangments of the electric and I. R. connections of the two previous plugs,
- fig. 8 and 9 respectively represent the circuits of the electric/environment transducers, and of the environment/ electric transducers of the plugs according to the invention.-

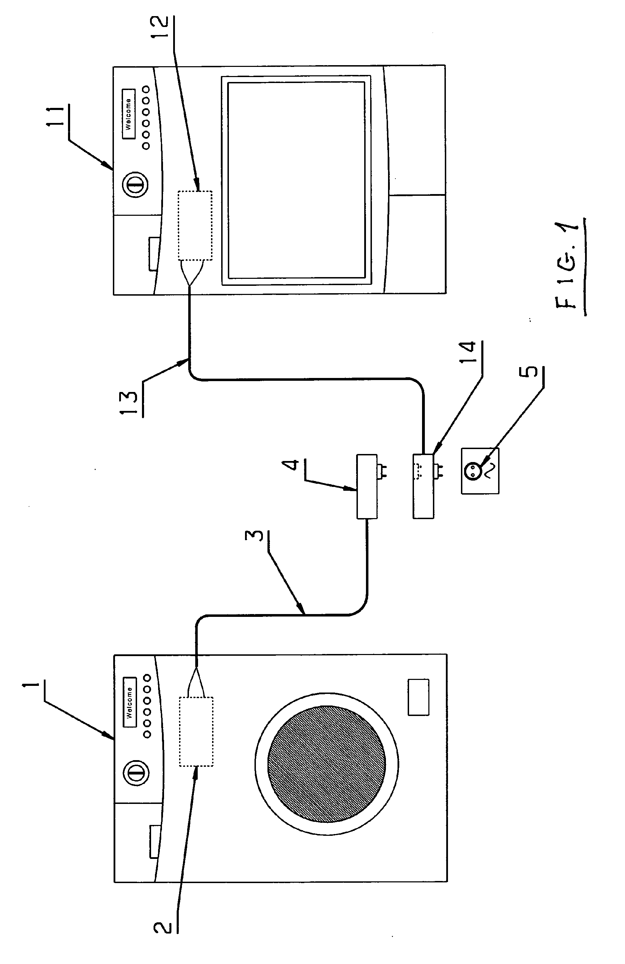

With reference to fig. 1, in a washing machine 1 of the prior art a printed circuit board 2 (that in the following will be called PCB) is mounted (often called "mother board"), lodging the electronic control circuits to which the information coming from the various sensors are bound, and that transmit the command and operating signals to the same appliance, according to pre-defined instructions and sequences.-

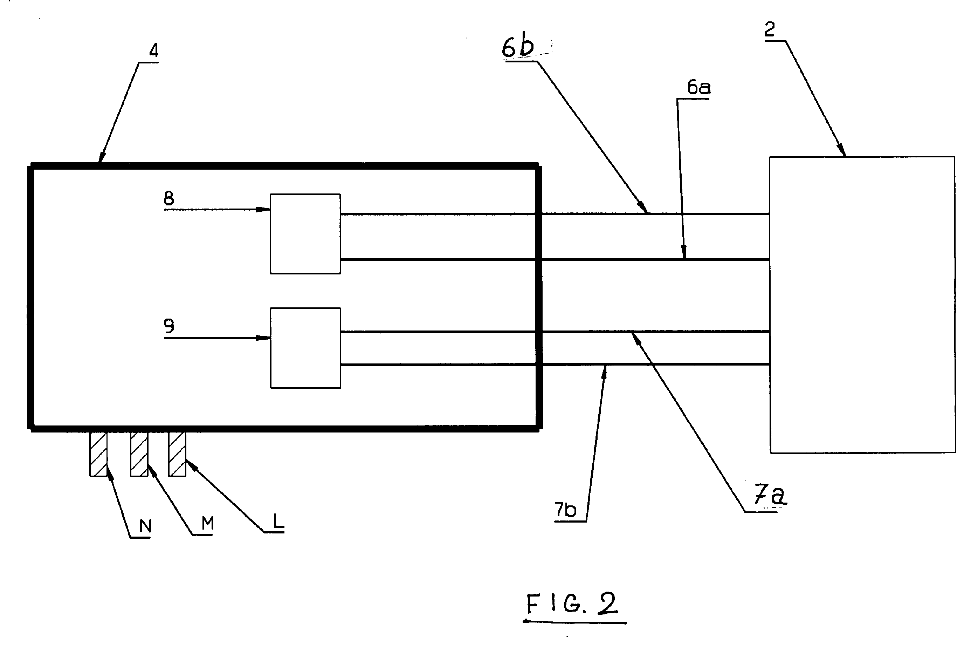

Said machine is obviously provided with an electric outer cable 3 comprising the three wire connections of line "L", neutral "N" and ground "G", for the electric power supply of the same machine and that terminate to a common plug 4, to be plugged into a normal electric socket 5. According to the instant invention, such appliance is being modified and supplemented as follows:
- said PCB 2 is provided with devices and means able of producing, processing, transmitting and receiving information generated outside the same appliance, and on which it will be further explained in the following,
- said information are exchanged with the outer environment through two couples of electric connections, 6a, 6b and 7a, 7b, connect said PCB to respective devices 8 and 9 resident in the same plug 4, as symbolically represented in fig. 2.-

Only for example it is here supposed that said electric connections 6a and 6b are used to transmit to the outside the signals generated by the PCB 2; in this case the respective device 8 is made by a transducer apt of converting the electric signal into some kind of environmental signal, f. i. an infrared (I.R) signal.-

The other two connections 7a and 7b on their part connect to said PCB 2 the respective device 9, which consists of a transducer apt of converting an environmental signal, for instance of the kind (infrared) just cited, into a corresponding electric signal, which is therefore captured from the outside and transmitted to said P.C. Board 2.-

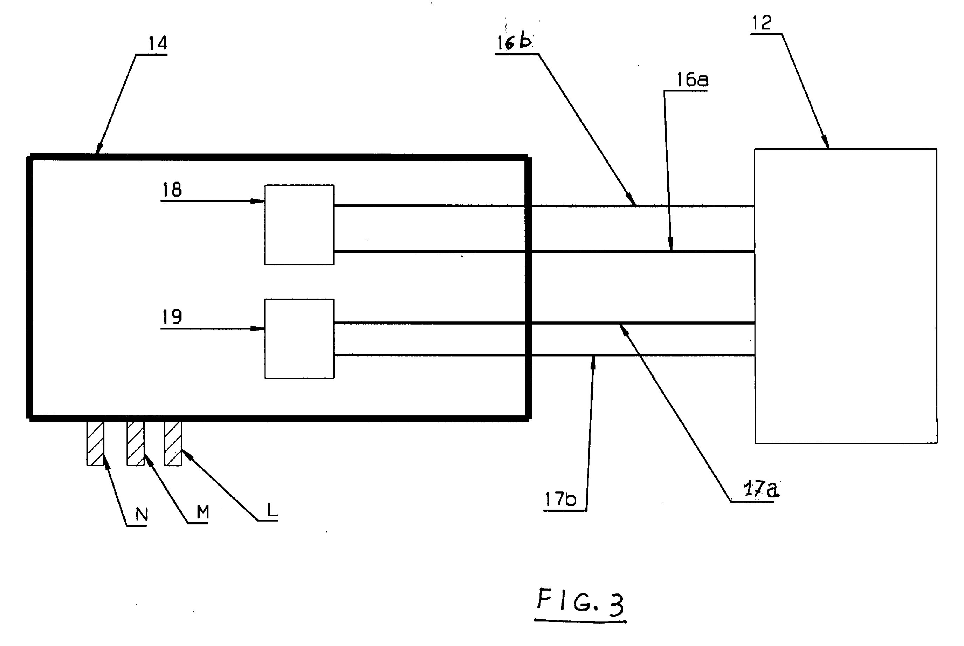

Still with ref. to fig. 1, it is observed the presence of a second appliance 11, provided with a respective mother board 12 with a respective A.C. supply cable 13 and a respective plug 14; the configuration of said second appliance is quite similar to that just described, and therefore, with ref. to fig. 3, even in this second case, on said second plug 14 two transducers 18, 19 are placed,
- the first of which, 18, being connected the respective mother board 12 through two respective connections 16a, 16b, and being able to convert a electric signal coming from said mother board 12 into an environmental signal,
- and the second one, 19, being able to convert an environmental signal into an electric signal and being connected to said respective mother board 12 through two respective electric connections 17a and 17b; said connections 16a, 16b, 17a and 17b are joined to appropriate electric terminals of the mother board 12 of the respective appliance 11.-

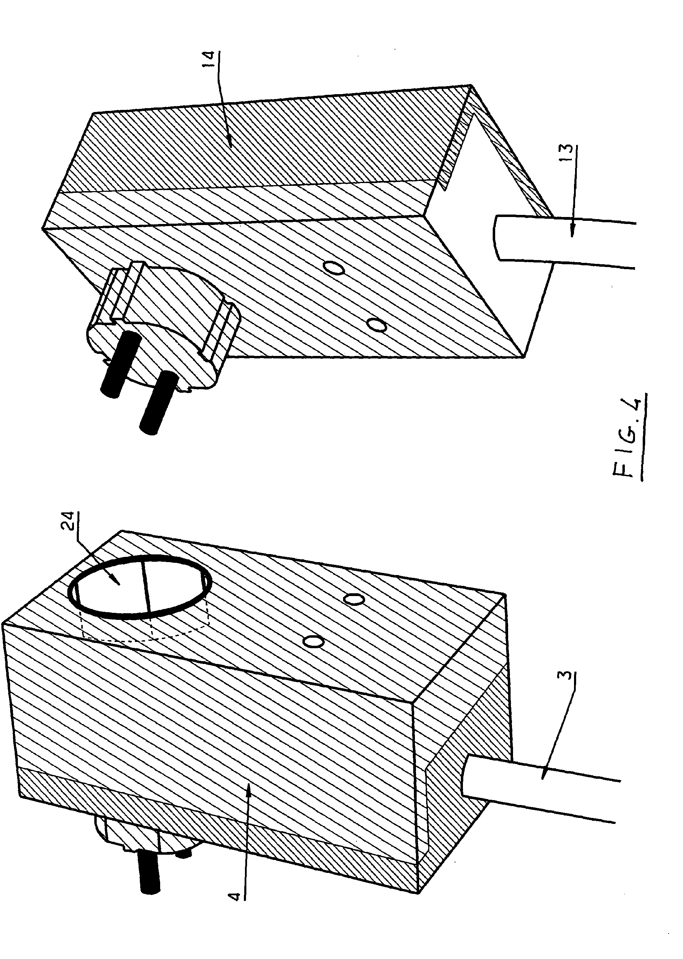

With ref. to fig. 4, said plugs 4 and 14 are so arranged and sized so that one of these, f. i. the plug 4, further of being able to be normally put into said electric socket 5 as shown, is also provided with a lodgement 24 in which the plug 14 of the appliance 11 can be connected; said plug 4 is internally connected with proper contacts and electric connections 41, 42 and 43, so that when the plug 14 is being inserted into the plug 4, the external terminals of the plug 14 are engaged with appropriate contacts of the plug 4 which take the supply electric voltage from the socket 5; as a matter of facts, and without further explanations, it will be clear that, considering the effects on the supply contacts of the plug 14, it will be enough to engage the plug 14 into the plug 4, and the latter into said socket 5, to have on said plug 14 the same voltage on the same terminals as if the plug 14 were inserted directly into the socket 5.-

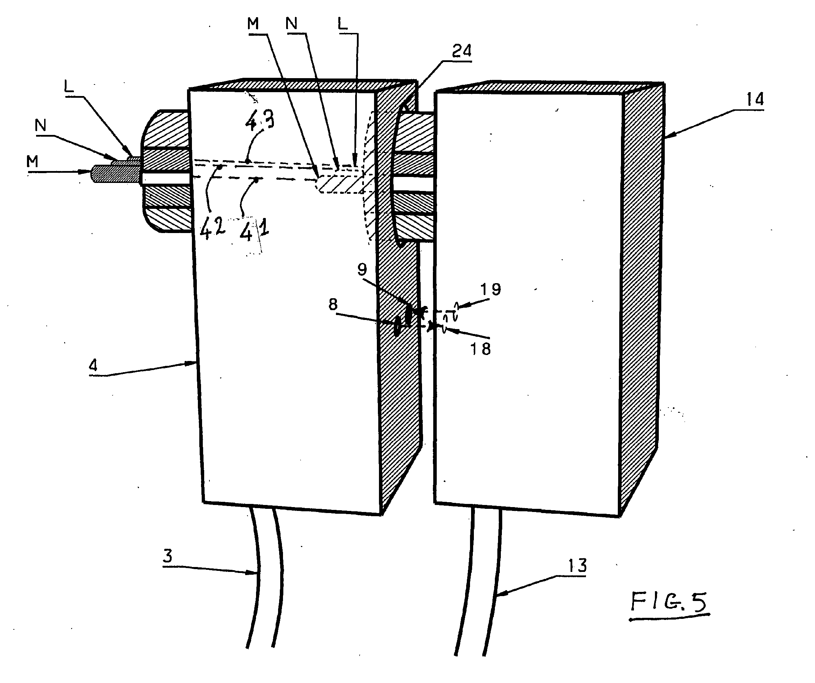

Said transducers 8, 9 and 18, 19 are so made and placed on the surface of the plugs 4 and 14 in positions and with orientation such that, when the plug 14 is fully engaged into the plug 4, as symbolically shown in fig. 5, the transducer 8 is fully faced with the transducer 19, and reciprocally the transducer 18 is faced with the transducer 9.-

So arranged and positioned, said transducers 8 and 18 make up an environmental I.R. communication channel able of send information and data from the appliance 1 to the appliance 11, and the transducers 19 and 9 are similaryly able yto send information and data from said second appliance 11 to said first appliance 1.-

In such a way a transmission/receiving channel between the two appliances 1 and 11 is realized, which however offers a plurality of advantages in that:
- it doesn't depend on any physical electric connection, that can create a possible incompatibility between the appliances 1 and 11,
- it is automatically realized and obtained just connecting the plugs 4 and 14 of the two appliances, as described,
- it doesn't require any action for their installation, as the appliances do communicate directly between them through the respective transducers lodged in the respective plugs,
- the appliances can be designed and programmed all the same in the conventional mode, i. e. without engaging the respective plugs, and the user can send the normal operation inputs from conventional control devices placed on the respective control panels.-

Advantageously this environmental connection uses for both transducers the infrared (I.R.) technique and so, with two couples of I.R. transducers, that is a transmitter/receiver transducer and a receiver/transmitter transducer, the desired prompt, reliable, easy and safe communication means is obtained, through which the two appliances can exchange data and commands.-

Such solution is especially preferred when the appliances to connect are two, an in a special way when the two appliances are working in correlated operation mode: for example the two appliance can be a washing machine and a drying machine.-

When these machines are connected according to the invention, some processing procedures can be prepared so that, when a machine is already in operation, specific signals are sent to the associated machine so as to prevent or limit, or even drive its operation, for example to limit the overall power consumption; furthermore when the appliance 1 is a washing machine and when it is still working, it is possible to detect with known means some information on the clothes type and on its quantity, as well as on washing program that has ben set.-

Such information can be automatically sent to the associated aplliance 11 that is a dryer, which so can proceed to a kind of auto- programming in the most suitable way in order to optimize the drying cycle.-

In any case the type of the information and data that are exchanged in the described way, as well as the transmission format and their purposes, are not here described and explained, as they are not comprised in the instant invention.-

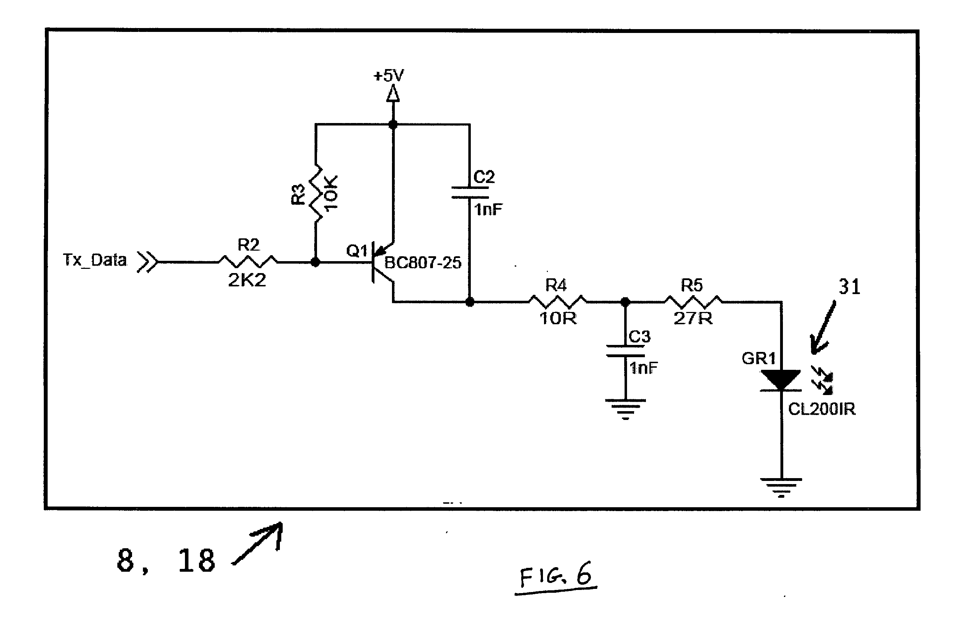

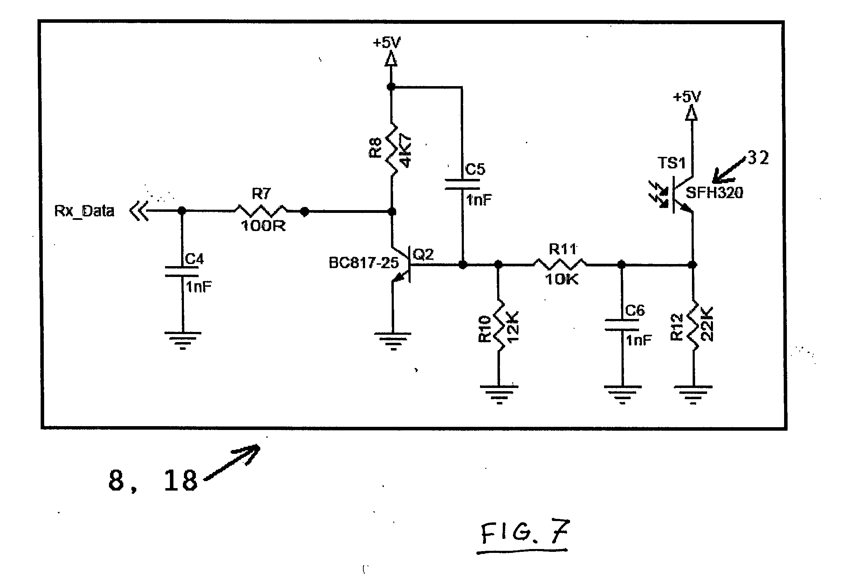

With reference to fig. 6, the transmission transducers 8 and 18 can be advantageously realized using electronic circuits wherein the electric/environmental transducing device comprises a photo-diode 31, and with ref. to the fig. 7 the receiving transducers 9 and 19 are corrispondently realized with electronic circuits wherein the environment/electric transducing device comprises a photo-transistor 32.-

## Claims

1. Household appliance (1) comprising process and control means (2) able of:
- control the operation of the functional devices of said appliance,
- transmitting to means, outside of said appliance, a plurality of information and signals under electronic format relevant to the operations of said functional devices and of the sensors of said appliance,
- receiving from first outer means a plurality of information under electronic format,
- and provided with a first electric plug (4) able of bein engaged with a corresponding appropriate electric socket (5) to connect the A.C. electric power supply (L, N, G) to wiring of said machine, **characterized in that** it comprises:
- first transducing means (8) apt to convert said information and electric signals into environmental signals, and to send said environmental signals to outer receiving means,
- electric connections (6a, 6b) able of transferring said electric signals generated by said process and control means (2) to said first transducing means (8),
- second transducing means (9) apt to receive environmental signals coming from outer means and to convert them into electric signals,
- respective electric connections (7a, 7b) able of transferring said electric signals, previously converted from said second transducing means (9), to said process and control means (2),
- said first (8) and second (9) transducing means being placed on said electric plug (4).-

2. Household appliance (1) according to claim 1, **characterized in that** said first electric plug (4) is able to be electrically coupled with a second electric plug (14), which is provided:
- with third transducer means (19) able of receiving environmental signals transmitted from said first plug (4),
- and fourth transducer means (18) able to send environmental signals from said first plug (14).-

3. Household appliance (1) according to claim 2, **characterized in that** said second plug (14) is connected to a second appliance (11) and that said first and second plugs (4, 14) are apt to be indipendently connected to a generic electric socket (5).-

4. Household appliance (1) according to claim 3, **characterized in that** said third means (19) of said second plug (14) are able to convert the environmental signals received from said first means (8) of said first plug (4), and to transmit corresponding electric signals to said second appliance (11), and that said fourth transduction means (18) of said second plug (14) are apt to convert electric signals coming from said second appliance (11) and to send corresponding environmental signals to said second transducer means (9) of said first plug (4).-

5. Household appliance (1) according to any of the preceding claims, **characterized in that** said environmental signals are infrared (I.R.) signals.-

6. Household appliance (1) according to claim 5, **characterized in that** said first and fourth transducing means (8, 18) are comprising a photo-diode (31), and that said second and third transducing means (9, 19) are comprising a photo-transistor (32).-
